# EUROPÄISCHE PATENTSCHRIFT

(11) **EP 2 037 666 B1**
(45) Veröffentlichungstag und Bekanntmachung des Hinweises auf die Patenterteilung: **22.08.2018**
(21) Anmeldenummer: 07017799.3
(22) Anmeldetag: 11.09.2007
(51) Int. Cl.: H04M 15/08, H04M 15/00, H04M 3/48, H04M 3/42, H04M 15/06

(54) **Verfahren und Kommunikationssystem zum Bereitstellen von Informationen für einen Rückruf unter geänderten Vergebührungsbedingungen**
Method and communication system for providing information for returning a call under changed charging conditions
Procédé et système de communication destinés à la fourniture d'information pour un rappell sous conditions de taxation amendées

(43) Veröffentlichungstag der Anmeldung: 18.03.2009
(73) Patentinhaber: Unify GmbH & Co. KG, 80807 München (DE)
(72) Erfinder: Bozionek, Bruno, 33178 Borchen (DE); Klaghofer, Karl, 81373 München (DE); Prange, Holger, 81373 München (DE); Tietsch, Michael, 86916 Kaufering (DE)
(74) Vertreter: Fritzsche, Thomas

(56) Entgegenhaltungen:
- EP-A- 0 795 992
- US-A- 5 774 533
- US-A1- 2005 141 686
- US-B1- 6 373 931
- US-B1- 6 775 365

## Beschreibung

Die Erfindung betrifft ein Verfahren zum Bereitstellen einer Kommunikation in einem Kommunikationssystem nach dem Oberbegriff das Anspruchs 1 sowie eine Anordnung zum Bereitstellen einer Kommunikation in einem Kommunikationssystem nach dem Oberbegriff des Anspruchs 17.

Im Bereich der Telekommunikation ist es hinlänglich bekannt, dass ein Anrufer im Falle der Abwesenheit des gerufenen Teilnehmers das Dienstmerkmal des "Rückrufs" nutzen kann.

Hierzu sind verschiedene Implementierungen bekannt, wie beispielsweise "Completion of Calls to Busy Subscribers" / "Completion Call on No Reply" (CCBS /CCNR), welche bei (ISDN) und dem auf ISDN basierenden Protokoll QSIG ("Signalisierung am Q-Referenzpunkt") zur Anwendung kommen.

In EP 0 795 992 A2 ist ein Verfahren beschrieben, bei dem ein Anruf zu einem Nachrichtenserver übertragen wird, der dem Anrufer die Option für einen pre-paid Rückruf des Empfängers gibt, wenn der zu rufende Empfänger unerreichbar ist. Der Empfänger wird dann über den vorhandenen pre-paid Rückruf durch periodische Anrufe benachrichtigt.

In US 5,774,533 ist ein Verfahren beschrieben, bei dem ein Kommunikationsdienst mit zugewiesenen Gebühren bereitgestellt wird, der es dem rufenden Teilnehmer erlaubt, Anweisungen zu Gebühren auf Basis einer Einzelverbindung zur Verfügung zu stellen. Ein rufender Teilnehmer initiiert eine Kommunikation mit zugewiesenen Gebühren durch Übertragung einer einheitlichen Anforderung in einem vordefinierten Format.

Die US 6 775 365 B1 gibt ein Verfahren zum Bereitstellen eines Rückrufservices an, wobei ein erster Teilnehmer versucht eine erste Verbindung zu einem zweiten Teilnehmer aufzubauen. Hierbei wird entweder vom ersten Teilnehmer oder vom zweiten Teilnehmer beantragt, einen direkten Rückrufservice bereitzustellen, in dem die Gebühren für den Rückruf durch den zweiten Teilnehmer dem ersten Teilnehmer auferlegt werden.

Auch aus der mobilen Kommunikation ist eine Rückrufoption bekannt, bei der entgangene Anrufe als Auswahlliste für einen (Rück-)Anruf angeboten werden. Vor allem in der mobilen Kommunikation fallen dabei (hohe) Gebühren für den Rückrufenden an.

Der Erfindung liegt die Aufgabe zugrunde, ein Verfahren und ein Kommunikationssystem anzugeben, die ein für einen Zurückrufenden gebührenfreies und einfaches Rückrufen ermöglichen.

Diese Aufgabe wird durch die Merkmale der Ansprüche 1 und 17 gelöst.

Bei dem erfindungsgemäßen Verfahren zum Bereitstellen einer Kommunikation in einem in einem Kommunikationssystem mit zumindest einem ersten Kommunikationsendgerät und zumindest einem zweiten Kommunikationsendgerät wird bei einem durch das erste Kommunikationsendgerät bei einem vorhandenen Verbindungswunsch zumindest zum zweiten Kommunikationsendgerät ausgeführten Ruf des zweiten Kommunikationsendgerätes bei Nichtzustandekommen der Verbindung im Kommunikationssystem eine erste Information über den nicht zustande gekommenen Ruf und das erste Kommunikationsendgerät derart hinterlegt, dass seitens des zweiten Kommunikationsendgerätes ein Rückruf zum ersten Kommunikationsendgerät ausgeführt werden kann, wobei das zumindest erste Kommunikationsendgerät über eine erste Vermittlungsstelle des Kommunikationssystems in das Kommunikationssystem eingebunden ist, in der ersten Vermittlungsstelle zumindest temporär, zumindest für einen mit dem nicht angenommenen Ruf korrelierenden Rückruf ein dem ersten Kommunikationsendgerät zugeordneter Standardwert für eine Vergebührungsart als zweite Information hinterlegt wird, das zumindest zweite Kommunikationsendgerät über eine zweite Vermittlungsstelle des Kommunikationssystems in das Kommunikationssystem eingebunden ist, die zweite Information von der ersten Vermittlungsstelle an die zweite Vermittlungsstelle übertragen wird, in der zweiten Vermittlungsstelle die zweite Information dem ersten Kommunikationsendgerät zugeordnet gespeichert wird, die erste Information und die zweite Information an das zweite Kommunikationsendgerät übermittelt und in dem zweiten Kommunikationsendgerät angezeigt werden, von dem zweiten Kommunikationsendgerät der Rückruf zum ersten Kommunikationsendgerät initiiert wird, und von der zweiten Vermittlungsstelle durch die in der zweiten Vermittlungsstelle (SWITCH_B) dem ersten Kommunikationsendgerät (T_A) zugeordnet abgespeicherten zweite Information die Vergebührungsart festgestellt wird.

Vorteil des erfindungsgemäßen Verfahrens ist eine Bereitstellung der Möglichkeit für eine flexiblere Abrechnung bei versäumten Anrufen.

Vorzugsweise wird dabei das erste Kommunikationsendgerät als zweite Information zumindest die Vergebührungsart Rückwärtsberechnung also R-Gespräch hinterlegen. Hierdurch bietet sich die Möglichkeit, einem angerufenen Kommunikationsendgerät den Nachteil, nämlich bei einem versäumten Anruf grundsätzlich beim Rückruf die Kosten zu tragen, aufzuheben.

Wird die zweite Information derart gebildet, dass die Vergebührungsart für alle beim ersten Kommunikationsendgerät terminierenden Rückrufe angewendet wird, erhält man eine besonders einfache Implementierungsvariante, die es zudem erlaubt, dass seitens des zweiten Kommunikationsendgerätes keine Auswahl getroffen werden muss und somit der Vorteil des Nichtzahlens bei einem Rückruf stets gewährleistet ist.

Alternativ kann die zweite Information derart gebildet werden, dass die Vergebührungsart von seitens des ersten Kommunikationsendgerätes bestimmten Parametern eine zumindest temporäre Gültigkeitsdauer aufweist. Durch diese Weiterbildung wird dem ersten Kommunikationsendgerät eine Möglichkeit gegeben, auf ihn zukommende Kosten zu kontrollieren, so dass nicht jeder nach einem erfolglosen Anruf eingehende Ruf der Gegenseite als Rückruf des nicht angenommenen Anrufs gewertet wird, sondern ab einer gewissen Zeitdauer als normaler Anruf eingestuft und abgerechnet werden soll.

Wird alternativ oder ergänzend seitens des ersten Kommunikationsendgerätes als Parameter die Zeit festgelegt, in der ein Rückruf auf Grundlage mittels der zweiten Information hinterlegten Vergebührungsart erfolgt, lässt sich besonders flexibel seitens des ersten Kommunikationsendgerätes eine Kostenkontrolle implementieren, der zudem Schutz vor Missbrauch bietet.

Bei einer weiteren Fortbildung des erfindungsgemäßen Verfahrens wird seitens des ersten Kommunikationsendgerätes als Parameter zumindest ein zweites Kommunikationsendgerät festgelegt, für das ein vom zweiten Kommunikationsendgerät initiierter Rückruf auf Grundlage mittels der zweiten Information hinterlegten Vergebührungsart erfolgt. Hierdurch lässt sich die Kostenkontrolle weiter verfeinern und auf einzelne Geräte zuschneiden, so dass man insbesondere als Nutzer eines ersten Kommunikationsendgerätes die Möglichkeit hat, den einzelnen Geräten diesen Kostenvorteil zu gewähren.

Wird die zweite Information seitens des ersten Kommunikationsendgeräts als im Anschluss an die Eingabe Zielwahlinformation seitens des Benutzers eingegebene Information, insbesondere Betätigung einer Sonderzeichentaste, erfasst, lässt sich auf einfache Art eine für jeden Anruf zugeschnittene flexible Kostenkontrolle initiieren. Zudem sind gängige Endgeräte für diesen auch als Nachwahl bekannten Vorgang in der Regel ausgestaltet, so dass das erfindungsgemäße Verfahren hierdurch vorteilhaft ohne große Änderung vorhandener Systeme implementiert werden kann.

Vorzugsweise erfolgt dabei die Erfassung in einem determinierten Zeitraum, so dass dem Nutzer des ersten Kommunikationsendgerätes nicht noch zusätzliche Ausgaben präsentiert werden müssen und somit wiederum eine Vereinfachung der Implementierung vorliegt.

Alternativ oder ergänzend kann bei einer Weiterbildung der Erfindung die Erfassung durch Betätigen einer Sondertaste gestartet und/oder beendet werden. Auch diese Variante ist in gängigen Endgeräten in der Regel implementiert, so dass die Erfindung ohne weiteres ausgeführt werden kann. Zudem bietet sie einem Benutzer des ersten Kommunikationsendgerätes eine Kontrollmöglichkeit über den Zeitraum, in der eine Erfassung erfolgt.

Eine sehr einfache Implementierung kann realisiert werden, wenn die zweite Information im ersten Kommunikationsendgerät hinterlegt wird.

Bei einer Weiterbildung können die erste Information und zweite Information in der ersten Vermittlungsstelle hinterlegt werden, so dass auf vorteilhafte Weise diese Information zentral verwaltet werden kann und beispielsweise zusätzlicher Speicherbedarf in den Endgeräten entfällt.

Dieser Vorteil wird durch die Weiterbildung, bei der die erste und zweite Information in der zweiten Vermittlungsstelle hinterlegt werden, zusätzlich unterstützt.

Wird die erste Information und die zweite Information bei Anzeige einer Anruferliste im zweiten Kommunikationsendgerät angezeigt, so kann eine Variante der Erfindung realisiert werden, bei der dem zweiten Kommunikationsendgerät eine Auswahlmöglichkeit gegeben wird, so dass dieses eine Kontrolle über die Vergebührung erhält.

Eine weitere vorteilhafte Ausgestaltung der Erfindung liegt darin, die Hinterlegung der ersten Information und/oder zweiten Information nach erfolgreichem Rückruf zu terminieren, so dass Speicher wieder freigegeben wird und für die Hinterlegung beispielsweise neuer erster bzw. zweiter Informationen vorgehalten werden kann.

Alternativ oder ergänzend kann es von Vorteil sein, die Hinterlegung nach einem determinierten Zeitraum zu terminieren, so dass auch der Fall abgewickelt werden kann, dass gar kein Rückruf erfolgt.

Alternativ oder ergänzend hierzu ist es auch von Vorteil, wenn die zweite Information über Rückrufsignalisierungskanal an die erste Vermittlungsstelle und/oder zweite Vermittlungsstelle und/oder an das zweite Kommunikationsendgerät übermittelt wird. Hierdurch ist keine separate Verbindung notwendig und das Hinterlegen kann im Rahmen des Rufs also zeitnah durchgeführt werden.

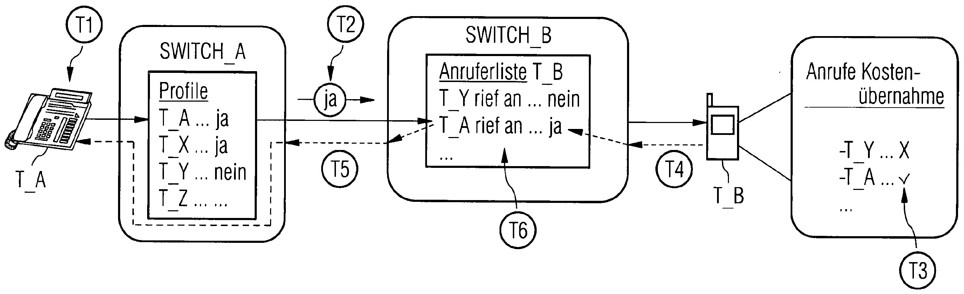

Weitere Vorteile und Einzelheiten der Erfindung werden ausgehend von einem in der einzigen Figur dargestellten Ausführungsbeispiel näher erläutert. Dabei zeigt die
Figur eine schematische Darstellung eines Ausführungsbeispiels des erfindungsgemäßen Verfahrens und des durchführenden Kommunikationssystems. In der Figur sind ein Ausführungsbeispiel des erfindungsgemäßen Verfahrens sowie ein Ausführungsbeispiel des erfindungsgemäßen Kommunikationssystems schematisch dargestellt und werden im Folgenden vereinfachend als ein (Ausführungs-)Beispiel bezeichnet.

Dabei wird von einem Szenario ausgegangen, welches typischerweise in einem Kommunikationsnetz entsteht, nämlich dass ein erster Teilnehmer T A eine Verbindung zu einem zweiten Teilnehmer T B aufnehmen will, wobei bei dem dargestellten Beispiel der erste Teilnehmer A als ein Telefon dargestellt ist, während der zweite Teilnehmer T B als ein Mobilteil ausgestaltet ist, dies aber nicht bedeutet, dass das Ausführungsbeispiel auf diese Art von Geräten beschränkt ist. Vielmehr können alle bekannten Kommunikationsgeräte inklusive rein softwarebasierende eine Telefonfunktion bereitstellende Applikationen wie sogenannte Voice over IP Clients, die das erfindungsgemäße Verfahren anwenden, gemäß der Erfindung zum Einsatz kommen.

Gemäß dem dargestellten Ausführungsbeispiel der Erfindung kommt das erfindungsgemäße Verfahren durch einen zu einem ersten Zeitpunkt T1 durch den ersten Teilnehmer T A initiierten Ruf zum Tragen, bei dem für die Anwendung der Erfindung angenommen sei, dass der zweite Teilnehmer T B nicht erreichbar ist. Alternativ oder ergänzend kann der erste Teilnehmer A dabei per sogenannter Nachwahl in einem definierten Zeitraum ab dem Zeitpunkt T1, beispielsweise solange der eingehende Ruf signalisiert wird, es also beispielsweise bei dem zweiten Teilnehmer T B klingelt, die bisherigen Standardeinstellungen für diesen aktuellen Anruf überschreiben.

Wie zu erkennen ist, löst der zu dem ersten Zeitpunkt T1 angestoßene Ruf bei einer ersten Vermittlungseinrichtung SWITCH A, welche auf der Seite dem ersten Teilnehmer T A zugeordnet ist, eine Überprüfung dahingehend aus, ob eine in der ersten Vermittlungsstelle SWITCH A hinterlegte Profiltabelle Standardwerte zur Kostenübernahme, wie sie bei einem Rückruf dem zweiten Teilnehmer T B signalisiert werden soll.

Ist nun ein derartiger Eintrag zur Kostenübernahme für die erste Teilnehmereinrichtung T A bei der ersten Vermittlungseinrichtung SWITCH A hinterlegt, so wird zu einem zweiten Zeitpunkt T2 beispielsweise als Attribut der Anrufsignalisierung die Information "Kostenübernahme Ja" zur Übertragung hinzugefügt und an eine zweite Vermittlungseinrichtung SWITCH B, welche dem zweiten Teilnehmer T B zugeordnet ist, übertragen. Andere Signalisierungen, wie beispielsweise das Setzen zumindest eines bestimmten Bits, also eines so genannten Flags, oder Kombinationen hiervon sind denkbar.

Die zweite Vermittlungseinrichtung SWITCH B kann dann dieses zusätzliche Attribut zugeordnet gespeichert zu dem ersten Teilnehmer A in einer Anrufliste, welche den Anruf des ersten Teilnehmers T A vermerkt hat, hinterlegt werden, so dass dem zweiten Teilnehmer T B bei der Anzeige einer Anruferliste mit versäumten Anrufen diese Information ebenfalls übermittelt und angezeigt werden kann. Wie in der Darstellung zu erkennen, wird dies dem zweiten Teilnehmer T B durch ein Häkchen neben der Kennzeichnung von dem ersten Teilnehmer T A angedeutet.

Daraufhin kann der zweite Teilnehmer zu einem vierten Zeitpunkt T4 den versäumten Anruf vom ersten Teilnehmer T A auswählen und den gewünschten Rückruf initiieren. Dabei stellt die zweite Vermittlungseinrichtung SWITCH B wiederum durch das dem ersten Teilnehmer T A zugeordnete und gespeicherte Attribut "Ja" fest, dass eine Kostenübernahme seitens des ersten Teilnehmers T A gewünscht war und initiiert in einem fünften Zeitpunkt T5 eine Verbindung, die als R-Gespräch aufgebaut wird, sobald der erste Teilnehmer T A das Gespräch annimmt.

Zu einem späteren sechsten Zeitpunkt T6 können die Rückruflisteneinträge erfindungsgemäß auch wieder gelöscht werden. Dabei kann dies beispielsweise dann erfolgen, sobald ein Rückruf erfolgreich ausgeführt worden ist oder bei einem nächsten erfolgreichen Anruf vom zweiten Teilnehmer T B zum ersten Teilnehmer T A, falls beispielsweise bei einem ersten Rückrufversuch der erste Teilnehmer T A den Rückruf nicht annehmen konnte. Optional, d.h. alternativ oder ergänzend kann eine derartige Löschung auch gesteuert durch einen Timer durchgeführt werden, so dass beispielsweise nach Ablauf von 24 Stunden der Eintrag in der zweiten Vermittlungsstelle SWITCH B gelöscht werden kann, wobei dies erfindungsgemäß dann auch dem zweiten Endgerät T B signalisiert werden müsste, so dass dieser seine Anrufliste entsprechend aktualisieren kann.

Als Alternative oder ergänzend zu dem dargestellten und beschriebenen Beispiel ist es auch denkbar, dass Rückrufe vom zweiten Endgerät T B zu dem ersten Endgerät T A generell als R-Gespräche aufgebaut werden.

Eine weitere Alternative bzw. Ergänzung kann bei einer Ausführungsform bzw. -Variante vorgesehen sein, dass seitens des ersten Endgeräts T A die Möglichkeit implementiert ist, dass die Kostenübernahme für einen zu erwartenden Rückruf von dem zweiten Endgerät T B zum ersten Endgerät T A seitens des ersten Endgerätes genehmigt oder verweigert, wobei diese Entscheidung insbesondere zu einem früheren Zeitpunkt erfolgt sein kann, also auch alternativ oder ergänzend zur oben genannten Nachwahl erfolgen kann.

Abhängig davon, ob auf der Seite des ersten Endgeräts T A auch Protokolleinflüsse toleriert bzw. gewünscht sind, kann dies als Alternative oder Ergänzung erfindungsgemäß implementiert sein, wobei dies analoge Endgeräte von einer Implementierung ausnimmt. Insbesondere bei dieser Alternative kann vorgesehen sein, dass im ersten Endgerät T A oder im der ersten Vermittlungseinrichtung SWITCH A das Profil des ersten Endgerätes T A hinterlegt wird.

Eine für analoge Endgeräte vorteilhafte Weiterbildung besteht darin, ohne Einflüsse auf die Signalisierung zu arbeiten, wobei mit der bei in der Regel analogen Endgeräten zu findenden "klassischen" Nachwahl, wie beispielsweise die Eingabe eines "*", dass erfindungsgemäße als "Gebühr wird übernommen" gewertet wird oder einer Eingabe von "#", welches als "Gebühr wird nicht übernommen" gewertet wird, die Erfindung realisiert wird.

## Patentansprüche

1. Verfahren zum Bereitstellen einer Kommunikation in einem Kommunikationssystem mit zumindest einem ersten Kommunikationsendgerät (T A) und zumindest einem zweiten Kommunikationsgerät (T_B), bei dem bei einem durch das erste Kommunikationsendgerät (T_A) bei einem vorhandenen Verbindungswunsch zumindest zum zweiten Kommunikationsendgerät (T_B) ausgeführten Ruf des zweiten Kommunikationsendgeräts (T_B) bei Nichtzustandekommen der Verbindung im Kommunikationssystem eine erste Information über den nicht zustande gekommenen Ruf und das erste Kommunikationsendgerät (T_A) derart hinterlegt wird, dass seitens des zweiten Kommunikationsendgeräts (T_B) ein Rückruf zum ersten Kommunikationsendgerät (T_A) ausgeführt werden kann, wobei
a) das zumindest erste Kommunikationsendgerät (T A) über eine erste Vermittlungsstelle (SWITCH_A) des Kommunikationssystems in das Kommunikationssystem eingebunden ist,
b) in der ersten Vermittlungsstelle (SWITCH_A) zumindest temporär, zumindest für einen mit dem nicht angenommenen Ruf korrelierenden Rückruf ein dem ersten Kommunikationsendgerät (T_A) zugeordneter Standardwert für eine Vergebührungsart als zweite Information hinterlegt wird,
c) das zumindest zweite Kommunikationsendgerät (T_B) über eine zweite Vermittlungsstelle (SWITCH_B) des Kommunikationssystems in das Kommunikationssystem eingebunden ist,
d) die zweite Information von der ersten Vermittlungsstelle (SWITCH_A) an die zweite Vermittlungsstelle (SWITCH_B) übertragen wird,
e) in der zweiten Vermittlungsstelle (SWITCH_B) die zweite Information dem ersten Kommunikationsendgerät (T_A) zugeordnet gespeichert wird,
f) die erste Information und die zweite Information an das zweite Kommunikationsendgerät (T_B) übermittelt und in dem zweiten Kommunikationsendgerät (T_B) angezeigt werden,
g) von dem zweiten Kommunikationsendgerät (T_B) der Rückruf zum ersten Kommunikationsendgerät (T_A) initiiert wird, und
h) von der zweiten Vermittlungsstelle (SWITCH_B) durch die in der zweiten Vermittlungsstelle (SWITCH_B) dem ersten Kommunikationsendgerät (T_A) zugeordnet abgespeicherten zweite Information die Vergebührungsart festgestellt wird.

2. Verfahren nach dem vorhergehenden Anspruch, **dadurch gekennzeichnet, dass** das erste Kommunikationsendgerät (T A) als zweite Information zumindest die Vergebührungsart Rückwärtsberechnung "R-Gespräch" hinterlegt.

3. Verfahren nach den vorhergehenden Ansprüchen, **dadurch gekennzeichnet, dass** die zweite Information derart gebildet wird, dass die Vergebührungsart für alle beim ersten Kommunikationsendgerät (T_A) terminierenden Rückrufe angewendet wird.

4. Verfahren nach einem der Ansprüche 1 bis 2, **dadurch gekennzeichnet, dass** die zweite Information derart gebildet wird, dass die Vergebührungsart von seitens des ersten Kommunikationsendgerätes (T_A) bestimmten Parametern eine zumindest temporäre Gültigkeitsdauer aufweist.

5. Verfahren nach dem vorhergehenden Anspruch, **dadurch gekennzeichnet, dass** seitens des ersten Kommunikationsendgerätes (T_A) als Parameter die Zeit festgelegt wird, in der ein Rückruf auf Grundlage mittels der zweiten Information hinterlegten Vergebührungsart erfolgt.

6. Verfahren nach einem der Ansprüche 3 bis 5, **dadurch gekennzeichnet, dass** seitens des ersten Kommunikationsendgerätes (T_A) als Parameter zumindest ein zweites Kommunikationsendgerät (T_B) festgelegt wird, für das ein vom zweiten Kommunikationsendgerät (T_B) initiierter Rückruf auf Grundlage mittels der zweiten Information hinterlegten Vergebührungsart erfolgt.

7. Verfahren nach einem der vorhergehenden Ansprüche, **dadurch gekennzeichnet, dass** das erste Kommunikationsendgerät (T A) die zweite Information als im Anschluss an die Eingabe der Zielwahlinformation seitens des Benutzers eingegebene Information, insbesondere Betätigung einer Sonderzeichentaste, erfasst.

8. Verfahren nach dem vorhergehenden Anspruch, **dadurch gekennzeichnet, dass** die Erfassung in einem determinierten Zeitraum erfolgt.

9. Verfahren nach dem Anspruch 7 oder 8, **dadurch gekennzeichnet, dass** die Erfassung durch Betätigen einer Sondertaste gestartet und/oder beendet wird.

10. Verfahren nach einem der vorhergehenden Ansprüche, **dadurch gekennzeichnet, dass** die zweite Information im ersten Kommunikationsendgerät (T_A) hinterlegt wird.

11. Verfahren nach einem der Ansprüche 1 bis 10, **dadurch gekennzeichnet, dass**
i) die erste Information und zweite Information in der ersten Vermittlungsstelle (SWITCH_A) hinterlegt werden.

12. Verfahren nach einem der Ansprüche 1 bis 11, **dadurch gekennzeichnet, dass**
j) die erste Information und zweite Information in der zweiten Vermittlungsstelle (SWITCH_B) hinterlegt werden.

13. Verfahren nach einem der vorhergehenden Ansprüche, **dadurch gekennzeichnet, dass** die erste Information und die zweite Information bei Anzeige einer Anruferliste in dem zweiten Kommunikationsendgerät (T_B) angezeigt wird.

14. Verfahren nach einem der vorhergehenden Ansprüche, **dadurch gekennzeichnet, dass** die Hinterlegung der ersten Information und zweiten Information nach erfolgreichem Rückruf terminiert.

15. Verfahren nach einem der vorhergehenden Ansprüche, **dadurch gekennzeichnet, dass** die Hinterlegung nach einem determinierten Zeitraum terminiert.

16. Verfahren nach einem der vorhergehenden Ansprüche, **dadurch gekennzeichnet, dass** die zweite Information über Rufsignalisierungskanal an die erste Vermittlungsstelle (SWITCH_A) und/oder zweite Vermittlungsstelle (SWITCH_B) und/oder an das zweite Kommunikationsendgerät (T_B) übermittelt wird.

17. Kommunikationssystem zum Bereitstellen von Kommunikation zwischen zumindest einem ersten Kommunikationsendgerät (T_A) und zumindest einem zweiten Kommunikationsgerät (T_B), wobei das Kommunikationssystem Mittel aufweist um bei einem durch das erste Kommunikationsendgerät (T A) bei einem vorhandenen Verbindungswunsch zumindest zum zweiten Kommunikationsendgerät (T_B) ausgeführten Ruf des zweiten Kommunikationsendgeräts (T_B) bei Nichtzustandekommen der Verbindung im Kommunikationssystem eine erste Information über den nicht zustande gekommenen Ruf und das erste Kommunikationsendgerät (T_A) zu hinterlegen, dass seitens des zweiten Kommunikationsendgeräts (T_B) ein Rückruf zum ersten Kommunikationsendgerät (T_A) ausgeführt werden kann, wobei
a) eine erste Vermittlungsstelle (SWITCH_A) des Kommunikationssystems Mittel aufweist, um das zumindest erste Kommunikationsendgerät (T_A) in das Kommunikationssystem einzubinden, wobei
b) in der ersten Vermittlungsstelle (SWITCH_A) Mittel vorgesehen sind um zumindest temporär, zumindest für einen mit dem nicht angenommenen Ruf korrelierenden Rückruf einen dem ersten Kommunikationsendgerät (T_A) zugeordneten Standardwert für eine Vergebührungsart als zweite Information zu hinterlegen,
c) eine zweite Vermittlungsstelle (SWITCH_B) des Kommunikationssystems mit Mitteln, über die das zumindest zweite Kommunikationsendgerät (T_B) in das Kommunikationssystem eingebunden ist, wobei
d) die erste und zweite Vermittlungsstelle Mittel aufweisen, um die zweite Information von der ersten Vermittlungsstelle (SWITCH_A) an die zweite Vermittlungsstelle (SWITCH_B) zu übertragen,
e) die zweite Vermittlungsstelle (SWITCH_B) Mittel aufweist, um die zweite Information dem ersten Kommunikationsendgerät (T_A) zugeordnet zu speichern,
f) das zweite Kommunikationsendgerät (T_B) Mittel aufweist um die erste Information und die zweite Information an das zweite Kommunikationsendgerät (T_B) zu übermitteln und in dem zweiten Kommunikationsendgerät (T_B) anzuzeigen und
g) das zweite Kommunikationsendgerät Mittel aufweist um den Rückruf zum ersten Kommunikationsendgerät (T_A) zu initiieren, und
h) die zweite Vermittlungsstelle (SWITCH_B) Mittel aufweist, um von der zweiten Vermittlungsstelle (SWITCH_B) durch die in der zweiten Vermittlungsstelle (SWITCH_B) dem ersten Kommunikationsendgerät (T_A) zugeordnet abgespeicherten zweite Information die Vergebührungsart festzustellen.

## Claims

1. A method for providing communication in a communication system with at least one first communication terminal (T_A) and at least one second communication terminal (T_B), wherein, if the first communication terminal (T_A) executes a call to the second communication terminal (T_B) and a request for connection at least to the second communication terminal (T_B) is present, if the connection is not established, first information about the call not answered and the first communication terminal (T_A) is stored in the communication system in such a manner that the second communication terminal (T_B) can execute a callback to the first communication terminal (T_A), wherein
a) wherein the at least one first communication terminal (T_A) is integrated in the communication system via a first switching center (SWITCH_A) of the communication system,
b) wherein a standard value for a charge type for a callback correlating at least to the call on the part of the first communication terminal (T_A) that was not taken is stored at least temporarily in the first switching center (SWITCH_A) as second information,
c) wherein the at least one second communication terminal (T_B) is integrated in the communication system via a first switching center (SWITCH_B) of the communication system,
d) the second information is transmitted by the first switching center (SWITCH_A) to the second switching center (SWITCH_B),
e) the second information is stored in the second switching center (SWITCH_B) as being assigned to the first communication terminal (T_A),
f) the first and the second information is transmitted to the second communication terminal (T_B) and displayed in the second communication terminal (T_B),
g) the second communication terminal (T_B) initiates a callback to the first communication terminal (T_A), and
h) the second switching center (SWITCH_B) determines the charge type based on the second information stored in the second switching center (SWITCH_B) as assigned to the first communication terminal (T_A).

2. The method according to the preceding claim, **characterized in that** the first communication terminal (T_A) will store at least the charge type backward calculation, in other words, a collect call, as second information.

3. The method according to the preceding claims, **characterized in that** the second information is formed such that the charge type is applied to all callbacks terminating at the first communication terminal (T_A).

4. The method according to any one of claims 1 to 2, **characterized in that** the second information is formed such that the charge type for parameters determined by the first communication terminal (T_A) has an at least temporary period of validity.

5. The method according to the preceding claim, **characterized in that** the first communication terminal (T_A) specifies as a parameter the time in which a callback takes place based on the charge type stored in the second information.

6. The method according to any one of claims 3 to 5, **characterized in that** the first communication terminal (T_A) specifies as a parameter at least one second communication terminal (T_B) for which a callback is initiated by the second communication terminal (T_B) on the basis of the charge type stored by means of the second information.

7. The method according to any one of the preceding claims, **characterized in that** the first communication terminal (T_A) detects the second information as information input by a user after entering the speed-dial information, particularly pressing a special character key.

8. The method according to the preceding claim, **characterized in that** the detection is performed in a determined period of time.

9. The method according to claim 7 or 8, **characterized in that** detection is started and/or ended by pressing a special character key.

10. The method according to any one of the preceding claims, **characterized in that** the second information is stored in the first communication terminal (T_A).

11. The method according to any one of claims 1 to 10, **characterized in that**
i) the first information and the second information is stored in the first switching center (SWITCH_A).

12. The method according to any one of claims 1 to 11, **characterized in that**
j) the first information and the second information is stored in the second switching center (SWITCH_B).

13. The method according to any one of the preceding claims, **characterized in that** the first information and the second information is displayed in the second communication terminal (T_B) when a caller list is displayed.

14. The method according to any one of the preceding claims, **characterized in that** storage of the first information and the second information is terminated after a successful callback.

15. The method according to any one of the preceding claims, **characterized in that** the storage is terminated after a determined period of time.

16. The method according to any one of the preceding claims, **characterized in that** the second information is transmitted via call signaling channel to the first switching center (SWITCH_A) and/or second switching center (SWITCH_B) and/or to the second communication terminal (T_B).

17. A communication system for providing communication between at least one first communication terminal (T_A) and at least one second communication terminal (T_B), wherein, if the first communication terminal (T_A) executes a call to the second communication terminal (T_B) and a request for connection at least to the second communication terminal (T_B) is present, if the connection is not established, the communication system has means to store first information about the call not answered and the first communication terminal (T_A) in the communication system in such a manner that the second communication terminal (T_B) can execute a callback to the first communication terminal (T_A), wherein
a) a first switching center (SWITCH_A) of the communication system has means to integrate the at least one first communication terminal (T_A) in the communication system, wherein
b) means are provided in the first switching center (SWITCH_A) to store, at least temporarily, a standard value for a charge type assigned to the first communication terminal (T_A) for a callback correlating at least to one call that was not taken as second information,
c) a second switching center (SWITCH_B) of the communication system has means via which the at least one second communication terminal (T_B) is integrated, wherein
d) the first and second switching centers comprise means to transmit the second information from the first switching center (SWITCH_A) to the second switching center (SWITCH_B),
e) the second switching center (SWITCH_B) has means to store the second information as being assigned to the first communication terminal (T_A),
f) the second communication terminal (T_B) has means to transmit the first information and the second information to the second communication terminal (T_B) and to display it in the second communication terminal (T_B), and
g) the second communication terminal has means to initiate a callback to the first communication terminal (T_A), and
h) the second switching center (SWITCH_B) has means for the second switching center (SWITCH_B) to determine the charge type based on the second information stored in the second switching center (SWITCH_B) as assigned to the first communication terminal (T_A).

## Revendications

1. Procédé destiné à la fourniture d'une communication dans un système de communication avec au moins un premier terminal de communication (T_A) et au moins un deuxième terminal de communication (T_B), dans lequel une première information concernant l'appel non abouti et le premier terminal de communication (T_A) est déposée lors d'un appel du deuxième terminal de communication (T_B) réalisé par le premier terminal de communication (T_A) lorsqu'une demande de connexion au moins au deuxième terminal de communication (T_B) est présente en cas de non-aboutissement de la connexion dans le système de communication de sorte qu'un rappel au premier terminal de communication (T_A) peut être réalisé du côté du deuxième terminal de communication (T_B), dans lequel
a) l'au moins premier terminal de communication (T_A) est intégré dans le système de communication via un premier centre de commutation (SWITCH_A) du système de communication,
b) dans le premier centre de commutation (SWITCH_A), une valeur standard associée au premier terminal de communication (T_A) pour le type de taxation est déposée au moins temporairement, au moins pour un rappel corrélé à l'appel non accepté en tant que deuxième information,
c) l'au moins deuxième terminal de communication (T_B) est intégré dans le système de communication via un deuxième centre de commutation (SWITCH_B) du système de communication,
d) la deuxième information est transférée du premier centre de commutation (SWITCH_A) au deuxième centre de commutation (SWITCH_B),
e) dans le deuxième centre de commutation (SWITCH_B), la deuxième information est enregistrée associée au premier terminal de communication (T_A),
f) la première information et la deuxième information sont transmises au deuxième terminal de communication (T_B) et affichées dans le deuxième terminal de communication (T_B),
g) le rappel au premier terminal de communication (T_A) est initié par le deuxième terminal de communication (T_B), et
h) le type de taxation est constaté par le deuxième centre de commutation (SWITCH_B) par la deuxième information enregistrée associée au premier terminal de communication (T_A) dans le deuxième centre de commutation (SWITCH_B).

2. Procédé selon la revendication précédente, **caractérisé en ce que** le premier terminal de communication (T_A) dépose au moins le type de taxation calcul au plus tard « conversation R » en tant que deuxième information.

3. Procédé selon les revendications précédentes, **caractérisé en ce que** la deuxième information est formée de telle sorte que le type de taxation est appliqué pour tous les rappels programmés pour le premier terminal de communication (T_A).

4. Procédé selon l'une quelconque des revendications 1 à 2, **caractérisé en ce que** la deuxième information est formée de telle sorte que le type de taxation de paramètres déterminés du côté du premier terminal de communication (T_A) présente une durée de validité au moins temporaire.

5. Procédé selon la revendication précédente, **caractérisé en ce que** le temps, pendant lequel un rappel a lieu sur la base du type de taxation déposé au moyen de la deuxième information, est fixé du côté du premier terminal de communication (T_A) en tant que paramètre.

6. Procédé selon l'une quelconque des revendications 3 à 5, **caractérisé en ce qu'**au moins un deuxième terminal de communication (T_B), pour lequel un rappel initié par le deuxième terminal de communication (T_B) a lieu sur la base du type de taxation déposé au moyen de la deuxième information, est fixé du côté du premier terminal de communication (T_A) en tant que paramètre.

7. Procédé selon l'une quelconque des revendications précédentes, **caractérisé en ce que** le premier terminal de communication (T_A) détecte la deuxième information en tant qu'information saisie du côté de l'utilisateur suite à la saisie de l'information de sélection de destination, en particulier l'actionnement d'une touche de caractère spécial.

8. Procédé selon la revendication précédente, **caractérisé en ce que** la détection a lieu dans une période déterminée.

9. Procédé selon la revendication 7 ou 8, **caractérisé en ce que** la détection est lancée et/ou terminée par actionnement d'une touche spéciale.

10. Procédé selon l'une quelconque des revendications précédentes, **caractérisé en ce que** la deuxième information est déposée dans le premier terminal de communication (T_A).

11. Procédé selon l'une quelconque des revendications 1 à 10, **caractérisé en ce que**
i) la première information et la deuxième information sont déposées dans le premier centre de commutation (SWITCH_A).

12. Procédé selon l'une quelconque des revendications 1 à 11, **caractérisé en ce que**
j) la première information et la deuxième information sont déposées dans le deuxième centre de commutation (SWITCH_B).

13. Procédé selon l'une quelconque des revendications précédentes, **caractérisé en ce que** la première information et la deuxième information sont affichées lors de l'affichage d'une liste d'appelants dans le deuxième terminal de communication (T_B).

14. Procédé selon l'une quelconque des revendications précédentes, **caractérisé en ce que** le dépôt de la première information et de la deuxième information est programmé après le rappel réussi.

15. Procédé selon l'une quelconque des revendications précédentes, **caractérisé en ce que** le dépôt est programmé après une période déterminée.

16. Procédé selon l'une quelconque des revendications précédentes, **caractérisé en ce que** la deuxième information est transmise au premier centre de commutation (SWITCH_A) et/ou deuxième centre de commutation (SWITCH_B) et/ou au deuxième terminal de communication (T_B) via canal de signalisation d'appel.

17. Système de communication destiné à la fourniture de communication entre au moins un premier terminal de communication (T_A) et au moins un deuxième terminal de communication (T_B), dans lequel le système de communication présente des moyens pour déposer une première information concernant l'appel non abouti et le premier terminal de communication (T_A) lors d'un appel du deuxième terminal de communication (T_B) réalisé par le premier terminal de communication (T_A) lorsqu'une demande de connexion au moins au deuxième terminal de communication (T_B) est présente en cas de non-aboutissement de la connexion dans le système de communication, qu'un rappel au premier terminal de communication (T_A) peut être réalisé du côté du deuxième terminal de communication (T_B), dans lequel
a) un premier centre de commutation (SWITCH_A) du système de communication présente des moyens pour intégrer l'au moins premier terminal de communication (T_A) dans le système de communication,
b) dans le premier centre de commutation (SWITCH_A), des moyens sont prévus pour déposer au moins temporairement, au moins pour un rappel corrélé à l'appel non accepté, une valeur standard associée au premier terminal de communication (T_A) pour un type de taxation en tant que deuxième information,
c) un deuxième centre de commutation (SWITCH_B) du système de communication avec des moyens, via lesquels l'au moins deuxième terminal de communication (T_B) est intégré dans le système de communication, dans lequel
d) le premier et deuxième centre de commutation présentent des moyens pour transférer la deuxième information du premier centre de commutation (SWITCH_A) au deuxième centre de commutation (SWITCH_B),
e) le deuxième centre de commutation (SWITCH_B) présente des moyens pour enregistrer la deuxième information associée au premier terminal de communication (T_A),
f) le deuxième terminal de communication (T_B) présente des moyens pour transmettre la première information et la deuxième information au deuxième terminal de communication (T_B) et les afficher dans le deuxième terminal de communication (T_B), et
g) le deuxième terminal de communication présente des moyens pour initier le rappel au premier terminal de communication (T_A), et
h) le deuxième centre de commutation (SWITCH_B) présente des moyens pour constater le type de taxation par le deuxième centre de commutation (SWITCH_B) par la deuxième information enregistrée associée au premier terminal de communication (T_A) dans le deuxième centre de commutation (SWITCH_B).
